# EUROPEAN PATENT APPLICATION

(11) **EP 2 423 869 A1**
(43) Date of publication of application: **29.02.2012**
(21) Application number: 11006129.8
(22) Date of filing: 26.07.2011
(51) Int. Cl.: G06Q 99/00

(54) **Method for risk-based data assessment**

(30) Priority: 29.07.2010 US 805406
(71) Applicant: Accenture Global Services Limited, Dublin 4 (IE)
(72) Inventor: Checco, Christopher P., Oakton, VA 22124 (US); Slater, Benjamin Anthony, Lyneham, ACT, 2602 (AU)
(74) Representative: Müller-Boré & Partner Patentanwälte

(57) **Abstract**

Systems, methods, and computer program products are provided for transforming data into a format suitable for analytics use, such as statistically-based risk assessments. In one exemplary embodiment, the method may include receiving data from one or more data sources, and generating one or more associations among the received data, the associations providing links between one or more data elements of the received data. In addition, the method may include generating one or more segmented data sets based on the received data and the one or more associations, the segmented data sets reflecting an organization of the received data, and integrating one or more variables related to the received data into the one or more segmented data sets to create pre-processed data. Furthermore, the method may include outputting the pre-processed data and integrated real-time data for application of analytics.

## Description

### RELATED APPLICATIONS

This application is related to, and incorporates by references in their entirety, U.S. Patent Application No.12/805,406, filed July 29, 2010, entitled "RISK SCORING SYSTEM AND METHOD FOR RISK-BASED DATA ASSESSMENT," by Benjamin Anthony Slater and Christopher P. Checco (Attorney Docket No. 10761.2361-00000), and U.S. Patent Application No. 12/805,406, filed July 29, 2010, entitled "SYSTEMIC RISK MONITORING SYSTEM AND METHOD FOR REVENUE AGENCIES," by Benjamin Anthony Slater and Christopher P. Checco (Attorney Docket No. 10761.2362-00000).

### TECHNICAL FIELD

The present disclosure generally relates to a system and method for data assessment and, more particularly, to a system and method for collection, analysis, and transformation of data into a format suitable for analytics use, such as statistical risk-based assessments.

### BACKGROUND

Taxpayers, such as, individuals and companies, may file income tax returns yearly. Based on a taxpayer's gross income and possible deductions and exemptions available, a taxpayer may either owe taxes or receive a refund for taxes paid during the year. Accordingly, it is common for a taxpayer to attempt to reduce his taxable income, and associated income tax liability, such that a taxpayer is required to pay a minimum amount of taxes.

In order to reduce the amount of income tax liability, taxpayers have been known to resort to fraudulent actions. Fraudulent actions may include, for example, deducting expenses that are not legally available, claiming more dependents than allowed by law, and failing to report all earned income. Other examples of fraudulent activity may include purchasing or stealing one or more false identities and filing fraudulent tax returns in an effort to receive a tax refund.

While these examples of fraudulent activities are prevalent, they may be difficult to identify by the tax receiving agency due to the volume of tax returns filed with the agency or for other reasons. For example, over 130 million tax returns were filed with the United States tax agency, the Internal Revenue Service ("IRS"), in 2007. A corresponding number of tax returns were also filed in the corresponding state(s) of residence for each taxpayer. Within this large volume of filed tax returns are a large number of fraudulent tax returns that either improperly reduce the correct amount of taxes owed or improperly increase the amount of refunds owed.

One way to identify a fraudulent tax return would be to audit the return when it is received, e.g., by comparing it to previously-filed returns, historical data, etc. When applying analytics to determine a fraud risk of a tax return, it is desirable to apply one or more risk rules and/or statistical algorithms to data contained in the tax return and/or a broad range of stored historical data. Current systems typically conduct this type of risk scoring at the time the tax return is received.

In current systems, however, this type of risk scoring is costly in terms of time and resources. Accordingly, the ability to employ analytic techniques is often limited by the need to maintain very high standards of performance and reliability in the transaction processing system because sophisticated analytics require substantial processing power and add substantial complexity if executed in real time as a part of the transaction processing.

### SUMMARY

In accordance with the present disclosure, as embodied and broadly described herein, a method of preparing data for performing analytic-based data assessment comprises: receiving data from one or more data sources; generating one or more associations among the received data, the associations providing links between one or more data elements of the received data; generating one or more segmented data sets based on the received data and the one or more associations, the segmented data sets reflecting an organization of the received data; integrating one or more variables related to the received data into the one or more segmented data sets to create pre-processed data; and outputting the pre-processed data and integrated real-time data for application of analytics.

In accordance with the present disclosure, as embodied and broadly described herein, a computer-readable recording medium storing a computer-executable program which, when executed by a processor, performs a method of preparing data for analytic-based data assessment, comprises: receiving data from one or more data sources; generating one or more associations among the received data, the associations providing links between one or more data elements of the received data; generating one or more segmented data sets based on the received data and the one or more associations, the segmented data sets reflecting an organization of the received data; integrating one or more variables related to the received data into the one or more segmented data sets to create pre-processed data; and outputting the pre-processed data and integrated real-time data for application of analytics.

In accordance with the present disclosure, as embodied and broadly described herein, a system of preparing data for performing analytic-based data assessment, the system comprises: at least one memory to store data and instructions; and at least one processor configured to access the at least one memory and, when executing the instructions, to: receive data from one or more data sources; generate one or more associations among the received data, the associations providing links between one or more data elements of the received data; generate one or more segmented data sets based on the received data and the one or more associations, the segmented data sets reflecting an organization of the received data; integrate one or more variables related to the received data into the one or more segmented data sets to create pre-processed data; and output the pre-processed data and integrated real-time data for application of analytics.

It is to be understood that both the foregoing general description and the following detailed description are exemplary and explanatory only and are not restrictive of the disclosure, as claimed.

### BRIEF DESCRIPTION OF THE DRAWINGS

The accompanying drawings, which are incorporated in and constitute a part of this disclosure, illustrate various embodiments and aspects of the present disclosure. In the drawings:

FIG. 1 illustrates an exemplary computing system for risk-based data assessment, consistent with certain disclosed embodiments;

FIG. 2 illustrates is a schematic view of an exemplary risk scoring engine, consistent with certain disclosed embodiments;

FIG. 3 illustrates a flowchart of an exemplary data creation process for an exemplary method of risk-based data assessment, consistent with certain exemplary embodiments;

FIG. 4 illustrates an exemplary data creation process for an exemplary method of risk-based data assessment, consistent with certain exemplary embodiments;

FIG. 5 illustrates an exemplary data creation process for an exemplary method of risk-based data assessment, consistent with certain exemplary embodiments;

FIG. 6 illustrates an exemplary data creation process for an exemplary method of risk-based data assessment, consistent with certain exemplary embodiments;

FIG. 7 illustrates an exemplary data creation process for an exemplary method of risk-based data assessment, consistent with certain exemplary embodiments; and

FIG. 8 illustrates an exemplary data creation process for an exemplary method of risk-based data assessment, consistent with certain exemplary embodiments.

### DETAILED DESCRIPTION

The following detailed description refers to the accompanying drawings. Wherever possible, the same reference numbers are used in the drawings and the following description to refer to the same or similar parts. While several exemplary embodiments and features are described herein, modifications, adaptations and other implementations are possible, without departing from the spirit and scope of the disclosure. For example, substitutions, additions or modifications may be made to the components illustrated in the drawings, and the exemplary methods described herein may be modified by substituting, reordering or adding steps to the disclosed methods. Accordingly, the following detailed description does not limit the disclosure. Instead, the proper scope of the disclosure is defined by the appended claims.

Systems and methods consistent with the present disclosure move complexity from the time of tax return processing to a preprocessing stage which simplifies the creation of analytical data during tax return processing, thus improving performance and reliability. Further, certain embodiments use a series of data structures or risk profiles corresponding to one or more entities to allow pre-calculated risk-relevant information to be stored and used to determine a risk score for a particular transaction, such as a tax return. When a transaction requires risk scoring, a risk scoring engine may determine the particular profile(s) related to the transaction, and gather the profiles and transaction together to provide the necessary data to risk scoring rules. For example, when a tax return is to be processed, the preprocessing manager may gather related profiles, e.g., for a taxpayer, a tax preparer, etc.

In this manner, systems consistent with the present disclosure may reduce complexity, thereby improving performance and reliability, in risk scoring that occurs at the time a transaction is received without reducing the ability to apply sophisticated analytic techniques to detect fraud.

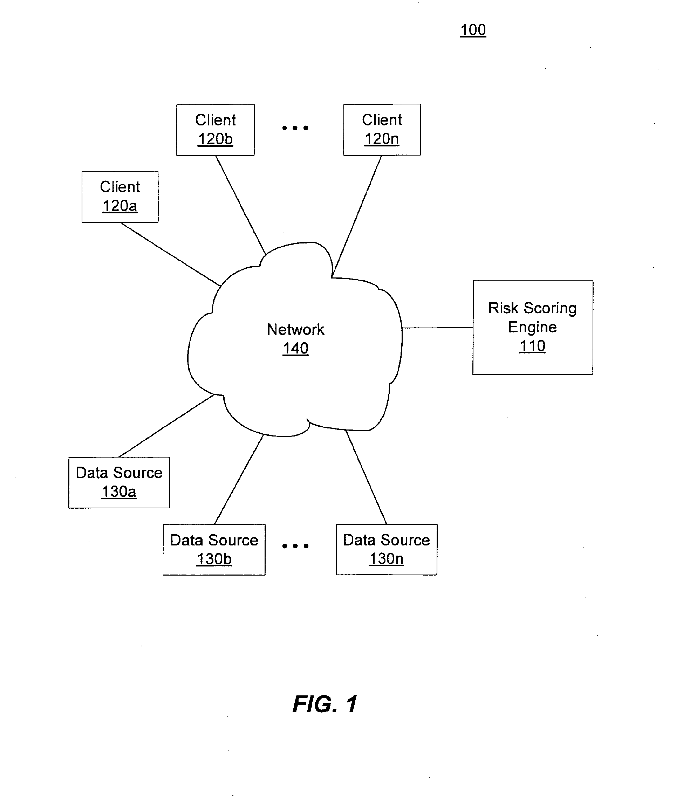

By way of a non-limiting example, FIG. 1 illustrates a system 100 in which the features and principles of the present disclosure may be implemented. The number of components in system 100 is not limited to what is shown, and other variations in the number and/or arrangements of components are possible, consistent with embodiments of the disclosure. The components of FIG. 1 may be implemented through hardware, software, firmware, etc. System 100 may include clients 120 (e.g., client 120a, client 120b, through client 120n), risk scoring engine 110, data sources 130 (e.g., data source 130a, data source 130b, through data source 130n and network 140.

Clients 120 may each include one or more apparatus configured to provide one or more users with an interface to network 140. By way of example, clients 120 may be implemented using any device capable of accessing a data network, such as, for example, a general purpose computer or personal computer equipped with a modem or other network interface. Clients 120 may also be implemented in other devices, such as, for example, laptop computers, desktop computers, mobile phones (with data access functions), Personal Digital Assistant ("PDA") with a network connection, IP telephony phone, or generally any device capable of communicating over a data network, such as, for example, network 140.

In some embodiments, clients 120 may be configured to transmit and/or receive data to/from risk scoring engine 110. Data may be entered into and/or stored on one or more clients 120. The data may include, for example, tax return data which a user may enter into client 120. After the user enters this information, client 120 may transmit the data to risk scoring engine 110, which in turn may receive the data, as well as store and/or analyze the data.

Data sources 130 may include one or more sources of data, including databases, data entry systems, document collection devices, etc. In some disclosed embodiments, data sources 130 may organize and store data collected for performing one or more methods of data collection, analysis, and transformation of data for risk-based assessment and risk scoring. In some embodiments, data sources 130 may include data previously received by risk scoring engine 110 *(i.e.,* historical data).

Data provided by data sources 130 may include data corresponding to any type of information, including, for example, demographic data, credit and/or financial data (e.g., credit bureau information, banking information, credit union information, lender information, etc.), employer and/or employee data (e.g., employer name, employer taxpayer identification number, employer address, taxable income, identification of employees, distributions to employees and/or government agencies, etc.), tax data (e.g., a taxpayer's name, address, social security number, tax ID number, taxable income, number of exemptions, deductions, tax credits, etc.), government data sources, publically-available data sources (e.g., GOOGLE ^{TM} , etc.), commercial data sources (e.g., LEXIS NEXIS^{TM}, etc.), etc. In addition, data sources 130 may include one or more database managements systems, which store database contents, allow data creation and maintenance, perform searches, provide security and backup, and allow other data accesses.

Risk scoring engine 110 may provide a platform for exchanging (e.g., sending and/or receiving) data with clients 120 and/or exchanging (e.g., sending and/or receiving) data with data sources 130. Risk scoring engine 110 may be implemented using a combination of hardware, software, firmware, etc., and may be operable to receive and store data from various clients 120. In some embodiments, risk scoring engine 110 may receive data from clients 120 regarding tax information. In addition, risk scoring engine 110 may also generate one or more alerts regarding possible fraud, for example, based on the data received in connection with one or more clients 120. In an embodiment, the functionality of risk scoring engine 110 may be implemented on a single physical chassis. In an alternative embodiment, the functionality of risk scoring engine 110 may be distributed amongst a plurality of physical chassis without departing from the scope of this disclosure. Additionally, in some embodiments, risk scoring engine 110 may be operated and/or implemented by a tax authority (e.g., the IRS, etc.)_{.} In other embodiments, risk scoring engine 110 may be operated and/or implemented by a third party vendor in support of the tax authority.

Network 140 provides communication between or among the various entities depicted in system 100. Network 140 may be a shared, public, or private network and may encompass a wide area network (WAN), local area network (LAN), an intranet, and/or the Internet. Network 140 may be implemented through any suitable combination of wired and/or wireless communication networks (including Wi-Fi networks, GSM/GPRS networks, TDMA networks, CDMA networks, Bluetooth networks, or any other wireless networks. Further, the entities of system 100 may be connected to multiple networks 140, such as, for example, to a wireless carrier network, a private data network, and the public Internet.

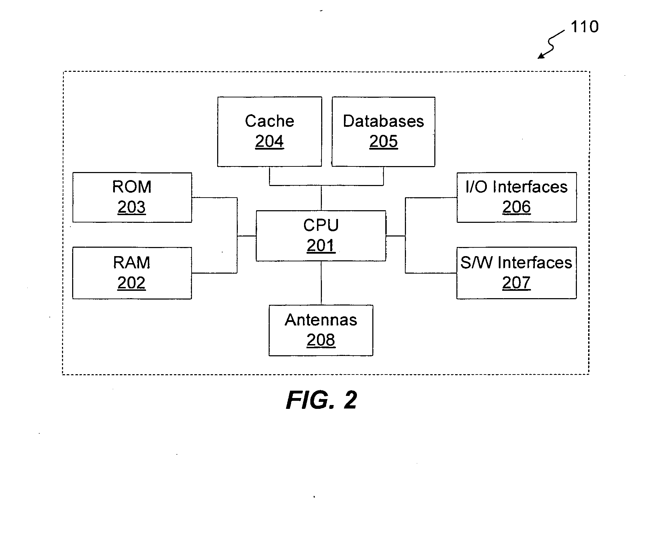

FIG. 2 is a schematic view of risk scoring engine 110, consistent with certain disclosed embodiments. As discussed above, risk scoring engine 110 may be operated and/or implemented by a tax authority and/or a third party vendor in support of the tax authority to perform risk-based analysis of tax data. As shown in FIG. 2, risk scoring engine 110 may include one or more of the following components: at least one central processing unit (CPU) 201 (also referred to herein as a processor) configured to execute computer program instructions to perform processes and methods consistent with the disclosed exemplary embodiments, random access memory (RAM) 202 and read only memory (ROM) 203 configured to access and store information and computer program instructions, cache 204 to store data and information, one or more databases 205 to store tables, lists, or other data structures, 1/0 interfaces 206 (including, for example, interfaces to network 140, one or more displays (not shown) one or more printers (not shown), one or more keyboards (not shown), etc.), software and firmware interfaces 207 (including, for example, interfaces to one or more user interfaces, etc.), antennas 208 for wireless transmission and/or reception of data and/or other information, etc.

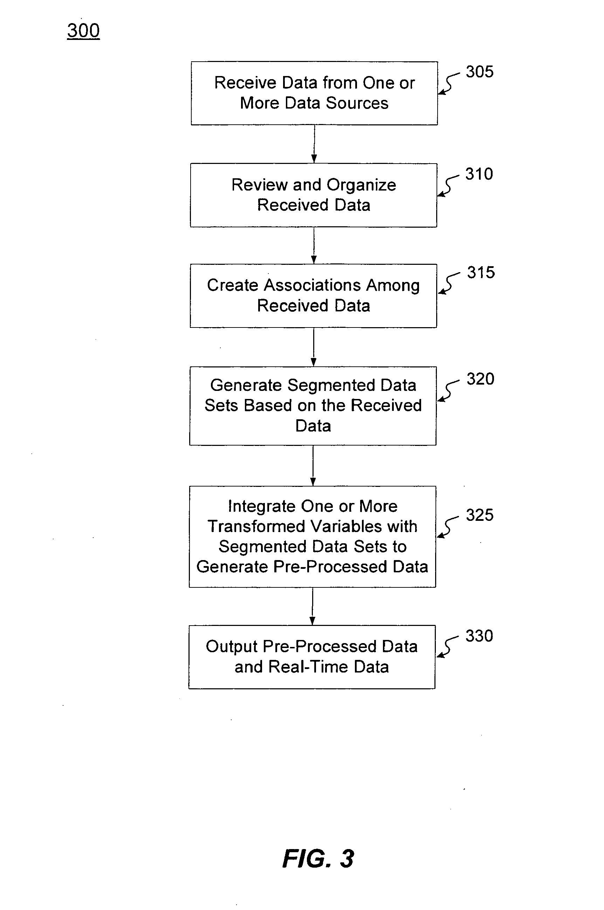

FIG. 3 is an exemplary flowchart 300 illustrating a process for risk-based data processing in a risk scoring engine, such as, for example, risk scoring engine 110, in accordance with certain implementations. Specifically, FIG. 3 illustrates an implementation in which central processing unit 201 of risk scoring engine 110 performs data collection, analysis, and transformation for risk scoring and risk-based assessments. For example, a tax collection agency or a third party provider may implement the process illustrated by flowchart 300 to prepare data for tax return processing, etc. Although the steps of the flowchart are described in a particular order, one skilled in the art will appreciate that these steps may be performed in a modified or different order, or that certain steps may be omitted or other steps added. Further, one or more of the steps in FIG. 3 may be performed concurrently or in parallel.

As shown in FIG. 3, risk scoring engine 110 may receive data from one or more data sources (305). The one or more data sources may include, for example, one or more data sources 130, as described above in connection with FIG. 1. For example, data sources 130 may include historical tax return data associated with a taxpayer. In some embodiments, risk scoring engine 110 may send a query to data sources 130, requesting the data. Alternatively and/or additionally, data sources 130 may send data to risk scoring engine 110 automatically, including, for example, at predetermined time (e.g., daily, weekly, monthly, etc.) or when predetermined conditions have been met (e.g., a predetermined amount of data has been collected, a predetermined threshold has been met, a predetermined triggering event has occurred, etc.). The received data may include, for example, demographic data, credit and/or financial data, employer and/or employee data, tax data, data compilations, etc. In addition, the received data may include unstructured data, data from documents received via one or more clients 120, and/or any other type of data. The received data may be stored in one or more storage locations of risk scoring engine 110, such as one or more databases 205.

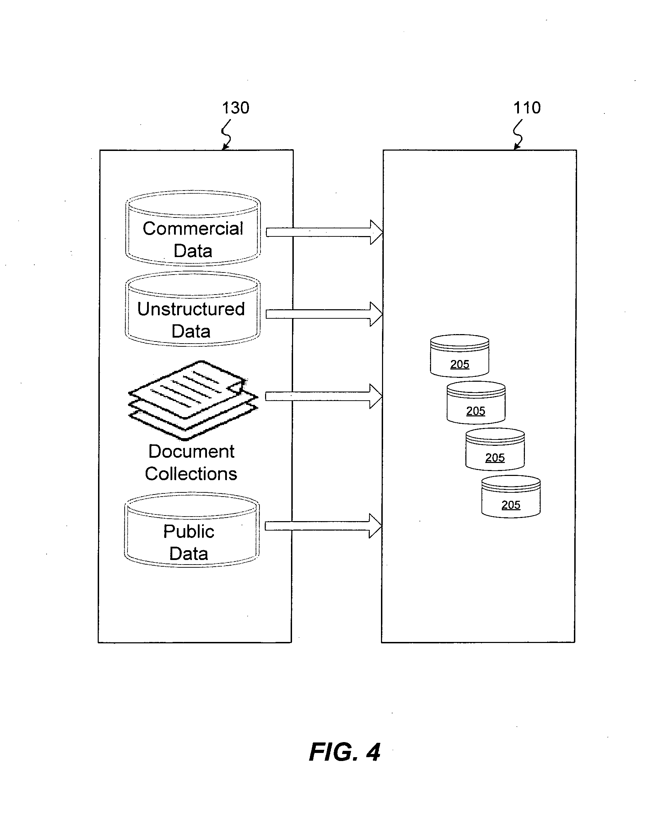

FIG. 4 is a diagram illustrating a process for receiving data by risk scoring engine 110, and storing the received data in database 205 of risk scoring engine 110, consistent with certain disclosed embodiments. In FIG. 4, data from multiple, disparate sources is staged such that initial data profiling and data cleansing may be applied. As shown in FIG. 4, one or more external data sources 130 may send data to risk scoring engine 110. Risk scoring engine 110 may, in turn, store the received data in one or more databases 205. As illustrated in FIG. 4, the received data may include any type of data including unstructured data, commercial data, document collections, public data, etc.

Referring again to FIG. 3, risk scoring engine 110 may review and organize the received data (310). Reviewing and organizing the received data may, for example, include initial data profiling and data cleansing based on one or more data elements of the received data.

Initial data profiling may include compiling the received data into one or more data element groups and/or data element ranges. For example, if the received data includes tax data, the one or more data element groups may include tax filing status (e.g., single, married, head of household, etc.) and the one or more data element ranges may include ranges of adjusted gross income. Cleansing the received data may include, for example, identifying any data elements that may be in a non-standard or non-preferred format, and changing the data elements to a standard or preferred format. For example, United States ZIP code data elements having five digit ZIP codes may be changed to nine digit ZIP codes (so-called "ZIP+4"). As another example, null values in certain data elements may be changed to predetermined values, which may include zero values. Risk scoring engine 110 may store the reviewed and organized data in, for example, one or more databases 205. In other embodiments, risk scoring engine 110 may provide the one or more reviewed and organized data to one or more external data sources 130 and/or in response to requests from one or more users.

Risk scoring engine 110 may identify and generate associations among the received data (315). The associations may be identified and generated within data received from a single data source 130 and/or between data received from more than one data source 130. Risk scoring engine 110 may store the generated associations as links to identify relationships between data elements. Associations may be generated to identify one or more relationships between one or more source-centric data views and one or more entity-centric data views.

Source-centric data views may be the data views associated with the source from which the data was received (e.g., data sources 130). Entity-centric data views may be data sets associated with an entity about which the data may relate. For example, in a tax embodiment, the entities may include, for example, one or more tax returns, one or more taxpayers, one or more tax preparers, one or more employers, etc. As such, an entity-centric data view for a taxpayer may include a view of all data associated with a taxpayer, e.g., the taxpayer's name, address, social security number, occupation, etc. The entity-centric data view for a tax preparer may include, for example, information regarding the entity who prepared the taxpayer's tax return, such as, for example, an individual preparer, a tax preparation service, a tax preparation company, etc. The entity-centric data view for a taxpayer's employer may include, for example, information regarding the taxpayer's one or more employers for the tax return. Thus, for example, associations between a source-centric view of a taxpayer and an entity-centric data view of historical data may include a taxpayer's name and social security number.

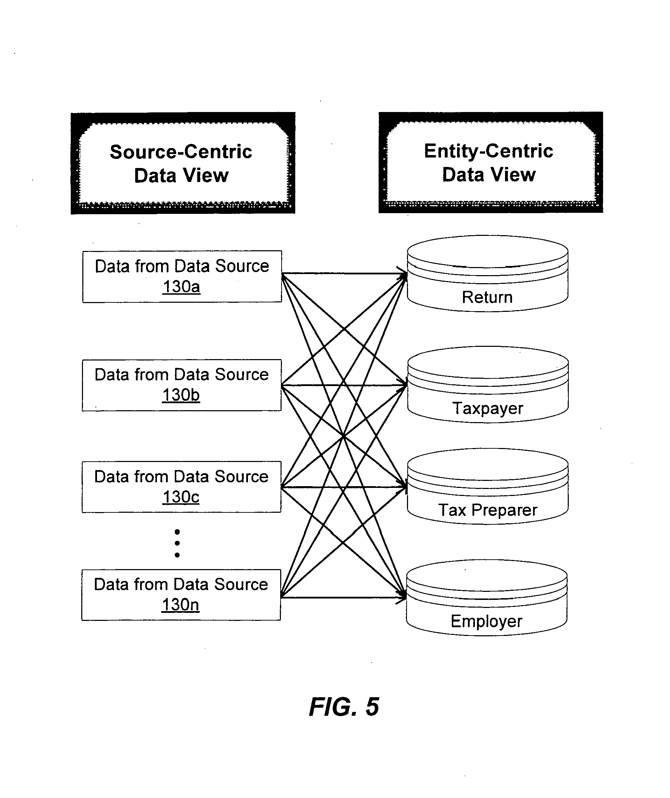

FIG. 5 is a diagram illustrating a process of generating associations among received data and the transformation from source-centric views to entity-centric views, consistent with certain disclosed embodiments. As shown in FIG. 5, in one exemplary embodiment, risk scoring engine 110 may identify data elements contained within the received data and create associations between one or more data elements of source-centric data views 510 (e.g., data view 51 0a, data view 510b, data view 510c, through data view 510n) and one or more data elements of entity-centric data views 520 (e.g., tax return data view 520a, taxpayer data view 520b, tax preparer data view 520c, taxpayer's employer data view 520d, etc.). For example, risk scoring engine 110 may identify and generate associations between one or more data elements of source-centric data view 510a and one or more data elements of each of entity-centric data views 520a, 520b, 520c, and 520d. In addition, risk scoring engine 110 may identify and generate associations between one or more data elements of source-centric data view 510b and one or more data elements of each of entity-centric data views 520a, 520b, 520c, and 520d, as well as identify and generate associations between one or more data elements of source-centric data views 510c through 510n and one or more data elements of each of entity-centric data views 520a, 520b, 520c, and 520d. Risk scoring engine 110 may store the identified and generated associations as links in, for example, a database management system of database 205. In this manner, according to one exemplary embodiment, the received data may be transformed from source-centric data views to entity-centric data views, readying the data for analytic modeling.

Referring again to FIG. 3, risk scoring engine 110 may create segmented data sets based on the received data (320). Segmented data sets may be data sets that are either logically and/or physically divided, separated, organized, and/or sectioned from one another. In one exemplary embodiment, segmented data sets may be data sets that are logically organized to be distinct from other data sets. The segmented data sets may be used to identify changes in behavior and/or trending. In addition, the segmented data sets may assist in identifying changes in normative values, including intra-entity normative values (e.g., for a single return, for a single taxpayer, for a single tax preparer, for a single employer, etc.), inter-entity normative values (e.g., among a set of returns for a single taxpayer, among a set of returns for a set of taxpayers, among a set of taxpayers, among a set of taxpayers associated with a single employer, among a set of taxpayers associated with a single tax preparer, among a set of tax preparers, among a set of employers, etc.), etc.

In some embodiments, the segmented data sets may be temporally-segmented data sets (e.g., daily, weekly, monthly, annually, etc.) for each of one or more entities (e.g., returns, taxpayer, tax preparer, employer, etc.). Temporally-segmented data sets may be aggregated to larger time segments. In some embodiments, the temporally-segmented data may be aggregated for a single entity, multiple entities, or any combination thereof.

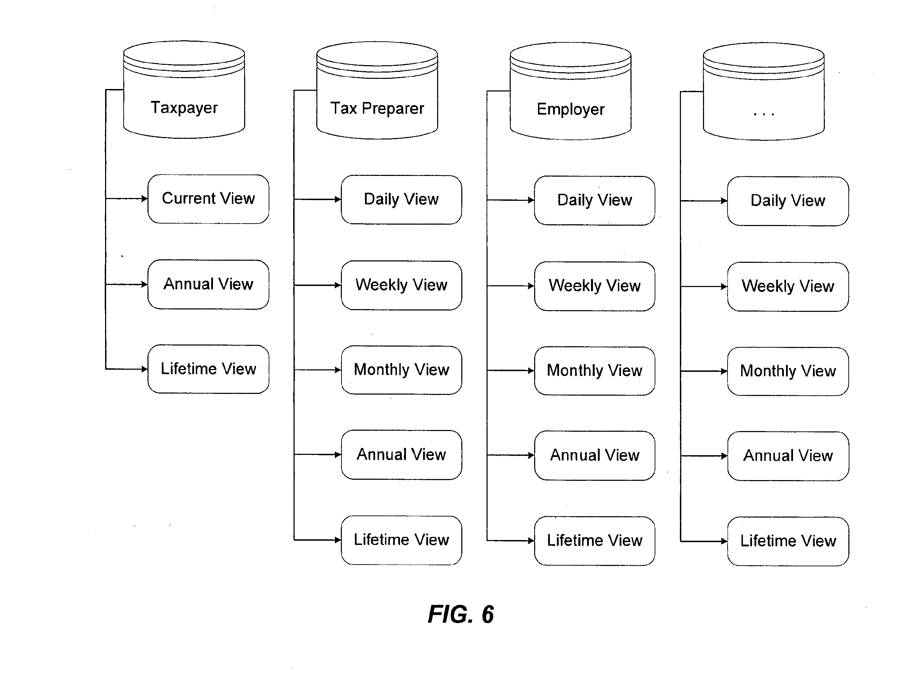

FIG. 6 illustrates one exemplary embodiment of temporally-segmented data sets, consistent with certain disclosed embodiments. In an implementation for processing tax returns, the entity-centric data views 520 may include a taxpayer data view 520b, a tax preparer data view 520c, and a taxpayer's employer data view 520d. The temporally-segmented data sets for a taxpayer (i.e., taxpayer temporally-segmented data sets 61 0b) may include, for example, a current view (e.g., the current tax return), an annual view (e.g., tax data received over the course of a year from, for example, the taxpayer's employer, etc.), and a lifetime view (e.g., every tax return a taxpayer has filed in their lifetime or the lifetime of the electronically-available data, or subsets thereof). The temporally-segmented data sets for a tax preparer (*i.e*., tax preparer temporally-segmented data sets 61 0c) may include, for example, a daily view (e.g., data related to all tax returns filed in a given day), a weekly view (e.g., data related to all tax returns filed in a given week), a monthly view (e.g., data related to all tax returns filed in a given month), an annual view *(e.g.,* data related to all tax returns filed in a given year), and a lifetime view (e.g., every tax return filed by a tax preparer in his/her lifetime or the lifetime of the electronically-available data). The temporally-segmented data sets for a taxpayer's employer (i.e., taxpayer's employer temporally-segmented data sets 610d) may include, for example, a daily view (e.g., tax data related to employees reported to a tax authority in a given day), a weekly view (e.g., tax data related to employees reported to a tax authority in a given week), a monthly view (e.g., tax data related to employees reported to a tax authority in a given month), an annual view (e.g., tax data related to employees reported to a tax authority in a given year), and a lifetime view (e.g., tax data related to employees reported to a tax authority in a lifetime of the taxpayer's employer or the lifetime of the electronically-available data).

Returning to FIG. 3, risk scoring engine 110 may integrate one or more transformed variables with the segmented data sets, such as the temporally-segmented data sets, to generate pre-processed data (325). Generating pre-processed data may increase the speed by which tax return data may be assessed, including risk-based assessment and risk scoring, consistent with the disclosed embodiments. In some embodiments, the transformed variables may replace one or more other data elements in the segmented data sets. In other embodiments, the transformed variables may supplement the data of the segmented data sets.

The one or more transformed variables may include, for example, categorical variables, calculated variables, trend variables, lifetime variables, etc. Raw variables may include any type of raw data received from one or more data sources 130. Categorical variables may include data associated with one or more categories of information. Examples of categorical variables may include a number of tax preparers associated with a tax preparation company, number of years a tax preparer has been in business, type of company (e.g., S-corporation, C-corporation, etc.), etc. Calculated variables may include any type of data obtained via simple calculations (e.g., addition, subtraction, etc.). Examples of calculated variables may include a total number of tax returns filed by a tax preparer, a total number of tax returns filed by a tax preparer within a certain time period, a total number of tax returns having a particular type of tax deduction, etc. Trend variables may include a summarization of data value changes over a specified period of time as compared to another predetermined period of time. Examples of trend variables include a total number of tax returns filed over the current week as compared to the total number of tax returns filed over the previous week, a value reflecting a rate of change in gross income from the current year versus the average gross income from the previous five years (e.g., increase, decrease, etc.), etc. Lifetime variables may include data corresponding to total values associated with an entity over a lifetime or, in the case of electronically-stored data, the lifetime of the stored data for one or more data elements, or a rolling predetermined window of time that can encapsulate all data equally (e.g., five year rolling window, etc.). Examples of lifetime variables may include a total number of tax returns filed by a taxpayer over the entity and/or stored data lifetime, a total number of tax returns filed by a tax preparer over the entity and/or stored data lifetime, a total number of tax returns having a particular type of tax deduction over the entity lifetime and/or stored data lifetime, etc.

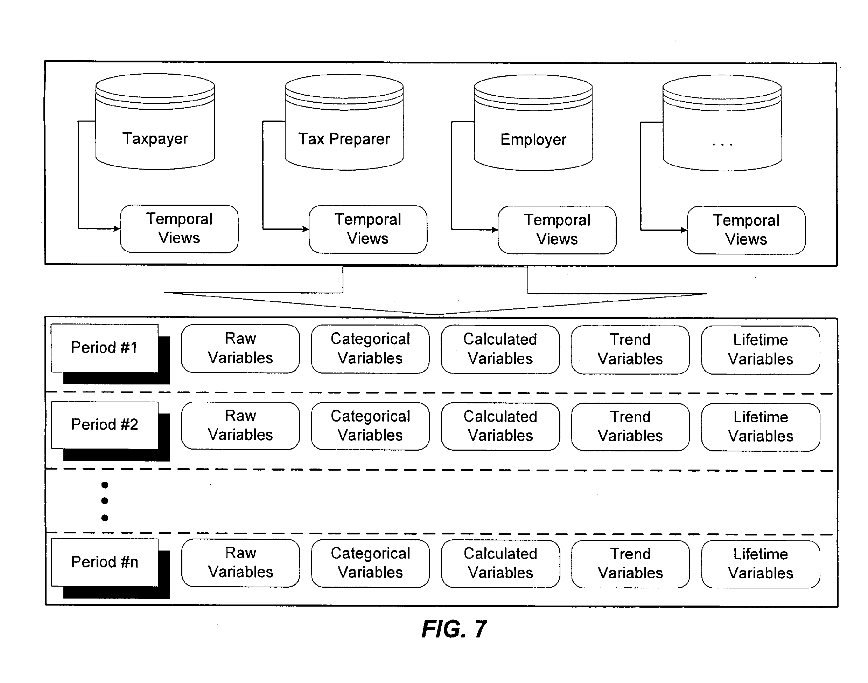

FIG. 7 illustrates one exemplary embodiment of integrating transformed variables with temporally-segmented data sets 610, consistent with certain disclosed embodiments. In FIG. 7, for each time period (i.e., Period #1, Period #2, ... , Period #n), the temporally-segmented data sets 610 associated with each entity-centric data view 520 are integrated with one or more transformed variables 710, including one or more raw variables, categorical variables, calculated variables, trend variables, and lifetime variables for each time period such that each entity has one record per time period. For example, the temporally-segmented data sets 61 0b are integrated with the one or more transformed variables for each time period, the temporally-segmented data sets 610c are integrated with the one or more transformed variables for each time period, the temporally-segmented data sets 610d are integrated with the one or more transformed variables for each time period, and so on. The resulting pre-processed data is then available for further processing and/or combination with real-time data.

Referring again to FIG. 3, risk scoring engine 110 outputs the pre-processed data in combination with integrated real-time data (330). In some embodiments, the combined data may be output and/or stored by database 205 for subsequent use by one or more other processes. In other embodiments, the combined data may be output to one or more 1/0 devices, including, for example, displays, printers, etc. In still other embodiments, the combined data may be output to one or more other computing devices, such as, for example, handheld electronic devices, mobile telephones, PDAs, etc. In some embodiments, the real-time data may be transformed as a result of its integration with the pre-processed data.

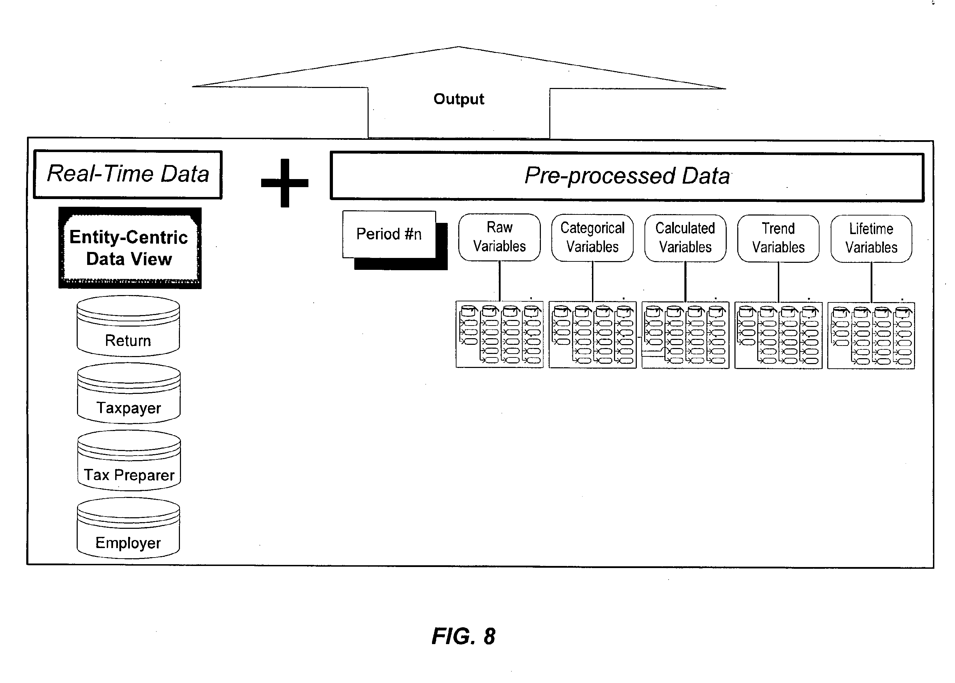

FIG. 8 illustrates one exemplary embodiment of outputting the pre-processed data 810 in combination with integrated real-time data 820, consistent with certain disclosed embodiments. In FIG. 8, the pre-processed data 810, consisting of temporally-segmented data sets which are integrated with one or more transformed variables, are output in connection with integrated real-time data 820. Integrated real-time data 820 may include current year tax data that may, in the disclosed implementations, be realized by risk scoring engine 110 as data views 520 when a tax return (e.g., tax return data view 520a) associated with a taxpayer (e.g., taxpayer data view 520b) is prepared and submitted by a tax preparer (e.g., tax preparer data view 520c), that further identifies the taxpayer's employer (e.g., taxpayer's employer data view 520d).

The disclosed embodiments may be used, for example, to determine if there is a potential for risk or potential opportunity/optimization associated with an action and/or activity, such as, for example, risk of fraud, financial risk, attrition risk, cross-sell opportunities, etc. For example, the disclosed embodiments may be used to analyze the same or substantially similar tax returns to determine if there is a risk of fraud associated with these tax returns. In addition, the disclosed embodiments may be used to generate risk scores such that different types of risk may have different risk scores. Each risk score may be compared with a risk score threshold that may be predetermined or customized. For example, using the disclosed embodiments, each tax season different risk score thresholds may be determined. Conversely, risk score thresholds may be used, unchanged, between tax seasons. When a risk score exceeds some predetermined threshold, a flag may be generated such that one or more alerts are provided to one or more appropriate users and/or entities who may, in turn, conduct a more detailed analysis of the identified risk, and determine if the taxpayer is attempting to fraudulently file the tax return.

To provide a simple, notional example, the average value of income for a taxpayer over the last 5 years and the average value of income for all taxpayers who have used a particular prepare in the last 5 years may be relevant to determining the risk associated with a particular tax return. Through the embodiments disclosed herein, these two averages may be calculated and stored in risk profiles for the taxpayer and prepare before the particular tax return arrives for processing. Rather than retrieving the last 5 years of tax returns for both the tax payer and the tax preparer and calculating an average as part of the scoring process, which may incur significant data processing overhead, risk scoring engine need only look up the predetermined and integrated real-time data values, as discussed and illustrated herein, and use them to calculate the risk score.

While certain features and embodiments of the disclosure have been described, other embodiments of the disclosure will be apparent to those skilled in the art from consideration of the specification and practice of the embodiments of the disclosure disclosed herein. Furthermore, although aspects of embodiments of the present disclosure have been described as being associated with data stored in memory and other storage mediums, one skilled in the art will appreciate that these aspects can also be stored on or read from other types of computer-readable media, such as secondary storage devices, like hard disks, floppy disks, or a CD-ROM, or other forms of RAM or ROM. Further, the steps of the disclosed methods may be modified in various ways, including by reordering steps and/or inserting or deleting steps, without departing from the principles of the disclosure.

Moreover, one of ordinary skill would appreciate that the disclosure may be used in other fields in addition to tax returns, such as, for example, insurance claims, visa/immigration applications, etc.

It is intended, therefore, that the specification and examples be considered as exemplary only, with a true scope and spirit of the disclosure being indicated by the following claims and their full scope of equivalents.

## Claims

1. A computer-implemented method of preparing data for analytic-based data assessment, comprising:
receiving data from one or more data sources;
generating one or more associations among the received data, the associations providing links between one or more data elements of the received data;
generating one or more segmented data sets based on the received data and the one or more associations, the segmented data sets reflecting an organization of the received data;
integrating one or more variables related to the received data into the one or more segmented data sets to create pre-processed data; and
outputting the pre-processed data and integrated real-time data for application of analytics.

2. The computer-implemented method of claim 1, wherein receiving the data further includes:
identifying one or more raw data elements in the received data; and
changing a value associated with each of the identified one or more raw data elements for processing of the received data.

3. The computer-implemented method of claim 1 or 2, wherein generating the one or more associations further includes:
generating the one or more associations among the received data based on at least one of a source of the data and an entity related to the received data.

4. The computer-implemented method of claim 3, wherein the entity is at least one of a tax return, a taxpayer, a tax preparer, and a taxpayer's employer.

5. The computer-implemented method of claim 4, wherein the received data includes historical data associated with the entity.

6. The computer-implemented method of any one of the preceding claims, further including:
combining the pre-processed data and the real-time data for analysis of a received tax return.

7. The computer-implemented method of any one of the preceding claims, wherein the segmented data views are temporally-segmented data views.

8. Computer program product comprising computer readable instructions, which when loaded and run in a computer system and/or computer network system, causes the computer system and/or the computer network system to perform operations according to a method of any one of the preceding claims.

9. A system for preparing data for analytic-based data assessment, the system comprising:
at least one memory to store data and instructions; and
at least one processor configured to access the at least one memory and, when executing the instructions, to:
receive data from one or more data sources;
generate one or more associations among the received data, the associations providing links between one or more data elements of the received data;
generate one or more segmented data sets based on the received data and the one or more associations, the segmented data sets reflecting an organization of the received data;
integrate one or more variables related to the received data into the one or more segmented data sets to create pre-processed data; and
output the pre-processed data and integrated real-time data for application of analytics.

10. The system of claim 9, wherein when the at least one processor is configured to receive the data, the at least one processor is further configured to:
identify one or more raw data elements; and
change a value associated with each of the identified one or more raw data elements for processing the received data.

11. The system of claim 9 or 10, wherein when the at least one processor is configured to generate the one or more associations, the at least one processor is further configured to:
generate the one or more associations among the received data based on at least one of a source of the data and an entity related to the received data, wherein the entity includes at least one of a tax return, a taxpayer, a tax preparer, and a taxpayer's employer.

12. The system of claim 11, wherein the received data includes historical data associated with the entity.

13. The system of any one of claims 9 to 12, wherein the at least one processor is further configured to:
combine the pre-processed data and the real-time data for analysis of a received tax return.

14. The system of any one of claims 9 to 13, wherein the segmented data views are temporally-segmented data views.
